# DEMANDE DE BREVET EUROPEEN

(11) **EP 1 657 040 A1**
(43) Date de publication de la demande: **17.05.2006**
(21) Numéro de dépôt: 05292429.7
(22) Date de dépôt: 16.11.2005
(51) Int. Cl.: B29C 37/02

(54) **Dispositif de coupe des carottes d'injection**

(30) Priorité: 16.11.2004 FR 0412144
(71) Demandeur: BBR Automation, 69760 Limonest (FR)
(72) Inventeur: Grosjean, Antoine, 69002 Lyon (FR); Chaix, Yann, 69270 Saint Romain Au Mont d'Or (FR)
(74) Mandataire: Bertrand, Didier

(57) **Abrégé**

L'invention concerne un dispositif de coupe (10) des carottes d'injection (16) de pièces en matière plastique (12), lesdites pièces présentant une surface sensiblement régulière (14). Le dispositif comprend : une platine (20) montée mobile sur un bâti (18) selon une direction donnée, des moyens de rappel élastiques (42) pour exercer un effort dans un premier sens sur ladite platine ; une lame de coupe (50) montée mobile sur ladite platine (20) selon une direction sensiblement perpendiculaire à ladite direction donnée, ladite lame de coupe étant adaptée à être portée en appui, contre ladite surface régulière (14) d'une pièce et au voisinage d'au moins une carotte d'injection (16) ; et, des moyens d'entraînement (52) de ladite lame de coupe (50) adaptés à entraîner ladite lame de coupe pour sectionner ladite carotte d'injection (16) dans le prolongement de ladite surface (14).

## Description

La présente invention se rapporte à un dispositif destiné à couper les carottes d'injection des pièces en matière plastique après le moulage.

Dans le domaine de la plasturgie, les pièces en matière plastique sont réalisées dans un moule monté sur une presse à injection. Usuellement, le moule comprend au moins deux parties s'emboîtant l'une dans l'autre, chacune des parties présentant des empreintes internes définissant la surface externe de la pièce à mouler. Après que le moule a été refermé, les empreintes internes définissent une chambre étanche dans laquelle est alors injectée sous pression la matière plastique ramollie au moyen d'une buse d'injection. Un canal d'injection s'étend dans le moule entre la buse d'injection et la chambre étanche dans laquelle est moulée la pièce de sorte que, une fois refroidie la pièce en matière plastique présente une carotte en saillie de sa surface et qui correspond à la matière plastique refroidie du canal d'injection.

Généralement, ces carottes d'injection sont sectionnées au sortir du moule par un opérateur durant le temps masqué pendant lequel la presse à injection réalise une pièce.

Bien évidemment, plus le temps de production d'une pièce est court et moins la pièce est coûteuse. On recherche donc des moyens pour accélérer à la fois la cadence de fonctionnement de la presse à injection et pour faciliter le travail de l'opérateur, en particulier le sectionnement de la carotte d'injection. Cette carotte d'injection est généralement coupée au moyen d'une pince ce qui est plus rapide qu'une lame de coupe mais laisse apparaître un bossage sur la pièce.

Aussi, un problème qui se pose et que vise à résoudre la présente invention est alors de fournir un dispositif qui permette non seulement d'araser la carotte d'injection sans laisser de bossage ni de trace mais au surplus, qui permette d'automatiser le sectionnement des carottes d'injection de façon à augmenter les cadences.

Dans ce but, la présente invention propose un dispositif de coupe des carottes d'injection de pièces en matière plastique, lesdites pièces présentant une surface sensiblement régulière, lesdites carottes d'injection s'étendant en saillie de ladite surface régulière, selon l'invention le dispositif comprend : une platine montée mobile en translation sur un bâti selon une direction donnée, des moyens de rappel élastiques étant interposés entre ladite platine et ledit bâti pour exercer un effort dans un premier sens sur ladite platine ; une lame de coupe montée mobile en translation sur ladite platine selon une direction sensiblement perpendiculaire à ladite direction donnée, ladite lame de coupe étant adaptée à être portée en appui, selon un sens opposé audit premier sens, contre ladite surface régulière d'une pièce et au voisinage d'au moins une carotte ; et, des moyens d'entraînement de ladite lame de coupe adaptés à entraîner en translation ladite lame de coupe, sensiblement parallèlement à ladite surface, tandis que ladite lame est en appui élastique contre ladite surface, de façon à sectionner ladite carotte dans le prolongement de ladite surface.

Ainsi, une caractéristique de l'invention réside dans le mode de coopération de la platine et de la lame de coupe qui permet de maintenir ladite lame de coupe en appui élastique sur la surface régulière de la pièce en matière plastique durant le mouvement de la lame de coupe qui vient alors tangentiellement, sectionner à la base la carotte d'injection. De la sorte, aucun bossage n'apparaît plus à la surface de la pièce comme cela était le cas lorsque la carotte d'injection était sectionnée au moyen d'une pince.

En outre, grâce aux moyens de rappel élastiques la lame de coupe reste en contact et en appui sur la surface régulière durant le processus de sectionnement et la course de la lame de coupe, ce qui favorise l'arasement de la carotte d'injection.

Selon un mode de mise en oeuvre de l'invention particulièrement avantageux, le dispositif de coupe comprend en outre, une plaque de bridage montée mobile sur ladite platine, ladite plaque de bridage étant adaptée à venir s'appliquer contre ladite pièce pour maintenir ladite surface régulière en appui contre ladite lame de coupe. Ainsi, grâce à la plaque de bridage, maintenue en appui plus encore contre la lame de coupe durant le sectionnement, les carottes d'injection sont coupées à la base même lorsque que la surface régulière présente une courbure. En effet, la lame de coupe est entraînée en mouvement avec une forte accélération de sorte que les moyens de rappel élastiques ne permettent pas toujours, et notamment pour les surfaces régulières à fortes courbures, de maintenir la pièce appliquée tangentiellement contre la lame de coupe durant la course de la lame de coupe.

Selon un mode préféré de réalisation de l'invention, le dispositif comprend des premiers moyens formant vérin entre ladite plaque de bridage et ladite platine, lesdits premiers moyens formant vérin comprenant un premier corps solidaire de ladite platine et au moins une première tige solidaire de ladite plaque de bridage. De la sorte, la plaque de bridage est adaptée à être entraînée selon un mouvement rectiligne grâce à des moyens formant vérin commandables par une alimentation en air comprimé, en huile ou même en courant électrique.

Avantageusement, ladite platine est solidaire d'un patin à billes engagé dans un rail de patin, ledit rail de patin étant solidaire dudit bâti de sorte que, la platine est mobile en translation par rapport au bâti avec très peu de frottements. En outre, des premiers moyens de butée permettent à la platine, contrainte par les moyens de rappel élastiques, d'être maintenue en position fixe lorsqu'elle est au repos. Ainsi, lorsque la platine est écartée de cette position de repos, dès que la pièce en matière plastique est appliqué contre la lame de coupe et qu'elle y revient après que la pièce a été écartée, elle revient alors en appui contre lesdits premiers moyens de butée pour reprendre sa position de repos.

Par ailleurs, le dispositif de coupe comprend des seconds moyens de butée solidaires dudit bâti contre lesquels lesdits moyens de rappel élastiques sont montés en appui. De la sorte, des moyens de rappel élastiques du type ressort hélicoïdal, sont susceptibles d'être interposés entre les seconds moyens de butée et la platine.

Selon un autre mode de mise en oeuvre particulièrement avantageux, le dispositif comprend des seconds moyens formant vérin entre ladite lame de coupe et ladite platine, lesdits seconds moyens formant vérin comprenant un second corps solidaire de ladite platine et au moins une seconde tige solidaire de ladite lame de coupe. De la sorte, grâce aux seconds moyens formant vérin, la lame de coupe est à la fois entraînée et guidée en translation afin d'assurer le sectionnement des carottes d'injection, et ce, au moyen d'une alimentation en air comprimé, en huile ou en courant électrique.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en élévation de face du dispositif de coupe conforme à l'invention ;
- la Figure 2 est une vue schématique en élévation de droite du dispositif de coupe illustré sur la Figure 1 ; et,
- la Figure 3 est une vue schématique en élévation de dessous du dispositif de coupe illustrée sur les figures précédentes.

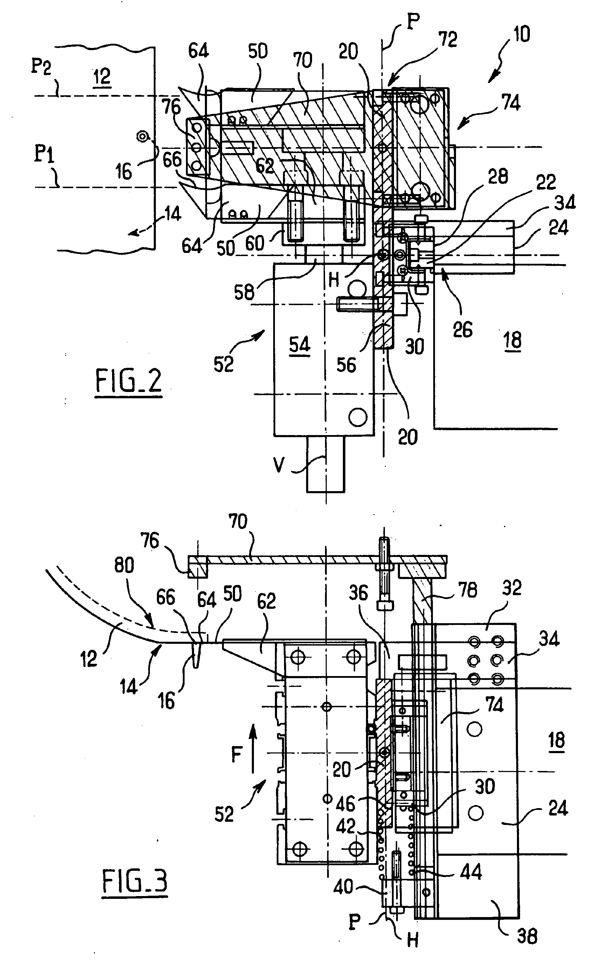

La Figure 2 illustre de côté, un dispositif de coupe 10 conforme à l'invention et une pièce en matière plastique 12 présentant une surface régulière 14 en arrière du plan du dessin, de laquelle une carotte d'injection 16 est étendue en saillie. La surface régulière 14 étant présentée sensiblement dans le plan du dessin, la carotte d'injection 16 s'étend alors en arrière perpendiculairement à ce plan.

Le dispositif de coupe 10 comporte un bâti longitudinal 18 disposé horizontalement et une platine 20 montée verticalement et coulissante selon une direction horizontal H, perpendiculairement, sur ledit bâti 18. Pour cela, la platine 20 est reliée au bâti 18 au moyen d'un rail à billes 22 et d'une semelle 24. La semelle 24 est montée horizontalement et sur le bâti 18 en s'étendant perpendiculairement et de chaque côté du bâti 18, à une extrémité libre supérieure 26 du bâti 18 et le rail à billes 22 comporte un patin à billes 28 solidaire du bord de la semelle 24 en surplomb du bâti 18 et un rails de patin 30 dans lequel est engagé le patin à billes 28 et qui est solidaire lui, de la platine 20. De la sorte, la platine 20 est mobile en translation horizontalement selon la direction H qui est elle-même comprise dans un plan moyen P vertical que la platine 20 définit.

En outre, ainsi que l'illustre la Figure 3, une première extrémité 32 de la semelle 24 est équipée de premiers moyens de butée 34 dont une extrémité 36 s'étend perpendiculairement à la semelle 24 et en dehors, contre lesquels la platine 20 est susceptible de venir en butée, tandis que, à une seconde extrémité 38 de la semelle 24, s'étendent des seconds moyens de butée 40 en regard des premiers 34, et contre lesquels prennent appui des moyens de rappel élastiques 42 formés d'un ressort hélicoïdal. Ce ressort hélicoïdal 42 présente une première extrémité 44 en appui contre les seconds moyens de butée 40 et une seconde extrémité 46 en appui contre une extrémité du rail de patin 30 duquel est solidaire la platine 20.

Ainsi, le ressort hélicoïdal 42 légèrement comprimé, exerce un effort sur le rail de patin 30, et par conséquent sur la platine 20 dans un sens F opposé aux seconds moyens de butée 40, de telle sorte que la platine 20 vient en appui, dans une position de repos, contre l'extrémité 36 des premiers moyens de butée 34. Toutefois, comme on l'expliquera dans la suite de la description, la platine 20 est susceptible d'être entraînée élastiquement en translation, à partir de sa position de repos, selon la direction horizontale H vers les seconds moyens de butée 40 dans un sens opposé à F grâce au ressort hélicoïdal 42 qui alors se comprime.

On se référera de nouveau à la Figure 2 montrant le dispositif de coupe en vue de côté. Cette Figure 2 montre également une lame de coupe 50 susceptible d'être étendue dans deux positions distinctes que l'on détaillera ci-après, la lame de coupe 50 étant reliée à la platine 20 par l'intermédiaire d'un bloc 52 formant vérin.

Ce bloc 52 présente un corps 54 maintenu en position fixe dans une extrémité inférieure 56 de la platine 20, sensiblement dans le prolongement du bâti 18. Ce corps 54 comporte des tiges de vérin 58 qui le traversent et qui sont susceptibles d'être entraînées en translation selon une direction verticale V. Les tiges de vérins 58 présentent une extrémité supérieure libre 60 solidaire d'une plaque horizontale sur laquelle est montée un porte-lame 62 qui s'étend sensiblement horizontalement dans une direction opposée au bâti 18.

Sur le porte-lame 62 est installée verticalement une lame coupante trapézoïdale 64, dont la partie coupante 66 est orientée vers le haut. Bien évidemment, une lame d'une autre forme peut être utilisée selon la mise en oeuvre du dispositif de coupe. Ainsi, le porte-lame 62 est susceptible d'être entraîné en translation, entre une position de repos P1 et une position active P2 en actionnant les tiges de vérin 58 selon la direction verticale V dans un sens opposé à leur corps 54, de manière à entraîner la partie coupante 66 en translation verticale ascendante. Ainsi, la lame coupante trapézoïdale 64 est entraînée en translation selon une direction verticale située dans le plan moyen qu'elle définit.

Le bloc 52 formant vérin est ici alimenté en air comprimé pour commander l'entraînement des tiges de vérin 58 entre une position rétractée et une position en extension correspondant respectivement à la position de repos P1 et à la position active P2 et bien évidemment, pour les commander également à l'inverse de la position d'extension vers la position rétractée.

En outre, le dispositif de coupe selon l'invention, comporte une plaque de bridage 70 qui est montée mobile en translation dans une extrémité supérieure 72 de la platine 20, opposée à extrémité inférieure 56. La plaque de bridage 70 est entraînée en translation grâce à un vérin transversal 74, dans la même direction que celle de la platine 20, ici selon la direction horizontale H. Par ailleurs, elle s'étend trapèzoïdalement et en s'amenuisant, depuis le vérin transversal 74 et perpendiculairement à la platine 20, jusqu'à une position située en regard de la lame coupante 64 et elle se termine par une barrette d'appui 76.

On se référera maintenant à la Figure 3 sur laquelle on retrouve la plaque de bridage 70 solidaire du vérin transversal 74 par l'intermédiaire d'une tige de vérin transversal 78 qui est ici dans une position d'extension correspondant à une position de repos. Le vérin transversal 74 est alimenté en air comprimé pour commander la tige de vérin transversal 78 dans une position de rétraction de façon à entraîner la plaque de bridage 70 en translation vers la lame coupante 64.

Ainsi, la pièce en matière plastique 12 que l'on retrouve avec sa carotte d'injection 16 en saillie de sa surface 14 est ici portée et maintenue, grâce à un robot non représenté, en appui contre la lame coupante trapézoïdale 64 de façon que, d'une part ladite lame coupante 64 épouse sensiblement la surface régulière 14, et que la partie coupante 66 soit située en amont de la carotte d'injection 16 et d'autre part, que la platine 20 qui est solidaire de la lame coupante 64 par l'intermédiaire du bloc 52 formant vérin ait été entraînée en translation dans un sens opposé à F, en comprimant lé ressort 42. De la sorte, la pièce en matière plastique 12 est maintenue en position fixe par ledit robot, tandis que la lame coupante 64 est elle maintenue en appui élastique contre la surface 14 de la pièce en matière plastique 12.

Ainsi, quelle que soit la courbure de la surface régulière 14 de la pièce en matière plastique qui est maintenue en position fixe, lorsque la lame coupante 64 est portée de la position de repos P1 vers la position active P2 pour sectionner la carotte d'injection 16, elle est entraînée, dans une position tangentielle, durant toute la course de la lame grâce aux moyens de rappel élastiques 42. En conséquence, la carotte d'injection 16 est sectionnée à la base sans laisser apparaître de bossage ou de bavure sur la surface régulière 14.

Par ailleurs, grâce à la plaque de bridage 70, qui est destinée à être entraînée en translation grâce au vérin transversal 74 vers la lame coupante 64 après que la pièce en matière plastique 12 a été appliquée contre la lame coupante 64, de façon que la barrette d'appui 76 vienne s'appliquer contre une surface opposée 80 à la surface régulière 14, la lame coupante 64 est plus encore maintenue en appui contre la surface régulière 14. En effet, la pièce en matière plastique 12 est maintenue en étau entre la barrette d'appui 76 et la lame coupante 64 qui est alors entraînée en frottement contre la surface régulière 14 pour sectionner la carotte d'injection 16.

Ainsi, lorsque le rayon de courbure de la surface régulière 14 est important, les moyens de rappel élastiques 42 qui permettent déjà de maintenir la lame coupante 64 en appui sur la surface régulière 14, sont complétés par la plaque de bridage 70, ce qui permet, malgré l'accélération de la lame coupante 64, de la maintenir en contact avec la surface régulière 14 durant toute sa course pour araser la carotte d'injection 16 et ne laisser apparaître aucun bossage.

Après que la lame coupante 64 a été portée de la position de repos P1 à la position active P2, pour sectionner la carotte d'injection 16, la plaque de bridage 70 est tout d'abord écartée de la surface opposée 80 pour libérer la pièce en matière plastique 12 qui elle, est ensuite entraînée en mouvement par le robot pour présenter une nouvelle carotte d'injection à sectionner, tandis que la lame coupante 64 est portée à nouveau dans sa position de repos P1.

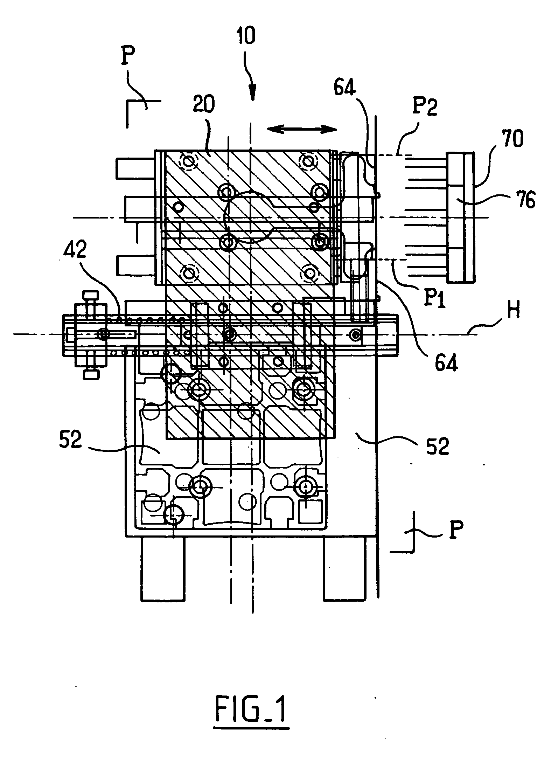

On se référera maintenant à la Figure 1 illustrant le dispositif de coupe, vu de face, et sur laquelle on retrouve la plaque de bridage 70 écartée de la lame de coupe 64, les moyens de liaison entre la plaque de bridage 70 et le vérin transversal 74 n'étant pas ici totalement représentés pour la clarté du dessin.

On retrouve également la platine 20 dont est solidaire la lame de coupe 64 par l'intermédiaire du bloc 52 formant vérin et qui est destinée à être entraînée élastiquement en translation selon la direction horizontale H et dans un sens opposé à la plaque de bridage 70 en comprimant les moyens de rappel élastiques 42.

En outre, la pièce en matière plastique 12 est destinée à être insérée depuis la face avant entre la plaque de bridage 70 et la lame de 64 de telle sorte que la carotte d'injection 16 soit située entre les positions de repos et active P1 et P2.

Par ailleurs, le dispositif de coupe 10 représenté sur la Figure 1 est susceptible d'être porté dans une autre position, par exemple décalée de 90° sans que la fonction des organes décrits ci-dessus n'en soit perturbée. Pour cela, il suffit par exemple de décaler en rotation le bâti 18 de 90°.

De plus, le dispositif de coupe selon invention n'est nullement limité aux carottes d'injection et il peut très bien être utilisé également pour sectionner les bavures qui apparaissent sur les pièces en matière plastique au niveau des plans de joint des moules.

## Revendications

1. Dispositif de coupe (10) des carottes d'injection (16) de pièces en matière plastique (12), lesdites pièces présentant une surface sensiblement régulière (14), lesdites carottes d'injection s'étendant en saillie de ladite surface régulière, **caractérisé en ce qu'**il comprend :
- une platine (20) montée mobile en translation sur un bâti (18) selon une direction donnée, des moyens de rappel élastiques (42) étant interposés entre ladite platine (20) et ledit bâti (18) pour exercer un effort dans un premier sens sur ladite platine,
- une lame de coupe (50) montée mobile en translation sur ladite platine (20) selon une direction sensiblement perpendiculaire à ladite direction donnée, ladite lame de coupe étant adaptée à être portée en appui, selon un sens opposé audit premier sens, contre ladite surface régulière (14) d'une pièce et au voisinage d'au moins une carotte d'injection (16) ; et,
- des moyens d'entraînement (52) de ladite lame de coupe (50) adaptés à entraîner en translation ladite lame de coupe, sensiblement parallèlement à ladite surface (14), tandis que ladite lame est en appui élastique contre ladite surface, de façon à sectionner ladite carotte d'injection (16) dans le prolongement de ladite surface (14).

2. Dispositif de coupe selon la revendication 1, **caractérisé en ce qu'**il comprend en outre, une plaque de bridage (70) montée mobile sur ladite platine (20), ladite plaque de bridage (70) étant adaptée à venir s'appliquer contre ladite pièce (12) pour maintenir ladite surface régulière (14) en appui contre ladite lame de coupe (50).

3. Dispositif de coupe selon la revendication 2, **caractérisé en ce qu'**il comprend des premiers moyens formant vérin (74, 78) entre ladite plaque de bridage (70) et ladite platine (20), lesdits premiers moyens formant vérin comprenant un premier corps (74) solidaire de ladite platine et au moins une première tige (78) solidaire de ladite plaque de bridage (70).

4. Dispositif de coupe selon la revendication 3, **caractérisé en ce qu'**il comprend des seconds moyens formant vérin (52) entre ladite lame de coupe (50) et ladite platine (20), lesdits seconds moyens formant vérin (52) comprenant un second corps (54) solidaire de ladite platine (20) et au moins une seconde tige (58) solidaire de ladite lame de coupe (50).

5. Dispositif de coupe selon l'une quelconque des revendications 1 à 4, **caractérisé en ce que** ladite platine (20) est solidaire d'un patin à billes (28) engagé dans un rail de patin (30), ledit rail de patin étant solidaire dudit bâti (18).

6. Dispositif de coupe selon l'une quelconque des revendications 1 à 5, **caractérisé en ce qu'**il comprend des premiers moyens de butée (34) contre lesquels ladite platine (20) est susceptible de venir en appui.

7. Dispositif de coupe selon la revendication 6, **caractérisé en ce qu'**il comprend des second moyens de butée (40) solidaires dudit bâti (18) contre lesquels lesdits moyens de rappel élastiques (42) sont montés en appui.
